# EUROPÄISCHE PATENTSCHRIFT

(11) **EP 2 655 037 B1**
(45) Veröffentlichungstag und Bekanntmachung des Hinweises auf die Patenterteilung: **24.10.2018**
(21) Anmeldenummer: 11810802.6
(22) Anmeldetag: 22.12.2011
(51) Int. Cl.: B29C 45/27, B29C 64/153

(54) **HEISSKANALDÜSE SOWIE VERFAHREN ZU DEREN HERSTELLUNG**
HOT RUNNER NOZZLE AND METHOD FOR MANUFACTURING THE SAME
BUSE DE CANAL CHAUD ET SON PROCEDE DE FABRICATION

(30) Priorität: 23.12.2010 DE 102010056073
(43) Veröffentlichungstag der Anmeldung: 30.10.2013
(73) Patentinhaber: Otto Männer Innovation GmbH, 79353 Bahlingen (DE)
(72) Erfinder: MÄNNER, Hans-Peter, 79353 Bahlingen (DE)
(74) Vertreter: Dunkel, Christoph
(86) Internationale Anmeldenummer: PCT/EP2011/006526
(87) Internationale Veröffentlichungsnummer: WO 2012/084252

(56) Entgegenhaltungen:
- EP-A1- 2 075 108
- WO-A1-00/46008
- WO-A1-97/02129
- DE-A1- 10 255 938
- DE-U1- 20 100 840
- US-A- 5 352 109
- US-A- 5 652 003

## Beschreibung

Die Erfindung betrifft eine Heißkanaldüse für Spritzgießformen, mit einem Düsenkörper, der einen Durchtrittskanal für eine Schmelze aufweist, welcher an einem ersten Endbereich eine Zuführöffnung und an einem zweiten Endbereich eine Austrittsöffnung hat.

Bei einer derartigen, aus DE 10 2004 009 806 B3 bekannten Heißkanaldüse ist es sehr vorteilhaft, ein gleichmäßiges Temperaturniveau über der gesamten Düsenlänge zu haben. Dies vermeidet thermische Schädigungen des zu verarbeitenden Kunststoffes aufgrund von Übertemperaturen. In den kälteren Bereichen der Heißkanaldüse hingegen kann der flüssige Kunststoff eventuell erstarren und so eine Verarbeitung unmöglich machen.

Beim Beheizen der Heißkanaldüse mittels eines geeigneten Heizelements tritt am Düsenkörper ein Temperaturgefälle auf. Im mittleren Bereich des Düsenkörpers herrscht eine höhere Temperatur als in den beiden Endbereichen des Düsenkörpers. Die Ursache hierfür ist, dass die an einem Formwerkzeug der Spritzgießform montierte Heißkanaldüse an ihrem einen Endbereich an dem relativ kühlen Formwerkzeug anliegt. Dies ist aus Abdichtungsgründen sowie aus Stabilitätsgründen notwendig.

Die Anlagefläche zwischen dem Düsenkörper und dem Formwerkzeug ist an einem Isolationsring angeordnet, der fest mit dem Düsenkörper verbunden ist. Obwohl sich diese Heißkanaldüse in der Praxis bewährt hat, weist sie dennoch Nachteile auf. So wird trotz des Isolationsrings ein gewisser Teil der von dem Heizelement in den Düsenkörper eingeleiteten Wärme in das Formwerkzeug der Spritzgießform abgeleitet, wodurch die Temperatur in diesem Teil des Düsenkörpers reduziert wird.

In dem zwischen den Endbereichen befindlichen mittleren Bereich der Düse wird keine Wärme in das Formwerkzeug abgeleitet. Daher ist hier ein Wärmestau vorhanden, der zu einer höheren Temperatur führt.

Eine weitere Heißkanaldüse ist aus der Anmeldung WO 00/46008 bekannt. Diese betrifft ein Verfahren zur Wärmeleitung in einem Düsenkopf zur Spritzgussverarbeitung von Kunststoffen bei dem die Temperaturverteilung und der Wärmefluss innerhalb des Düsenkopfes durch das schichtweise alternierende Anordnen von mindestens einem Bereich aus wärmeisolierendem Material und mindestens einem Bereich aus wärmeleitendem Material entlang des Düsenkanals homogenisiert wird.

Es besteht deshalb die Aufgabe, eine Heißkanaldüse der eingangs genannten Art zu schaffen, die in Montagestellung im beheizten Zustand über ihre Düsenlänge ein möglichst gleichmäßiges Temperaturniveau ermöglicht.

Diese Aufgabe wird erfindungsgemäß durch die Heißkanaldüse nach Anspruch 1 sowie durch das Verfahren zu deren Herstellung nach Anspruch 7 gelöst.

In vorteilhafter Weise kann bei der Konstruktion der Heißkanaldüse durch entsprechendes Ausgestalten des mindestens einen Hohlraums der Wärmefluss in dem Düsenkörper so eingestellt werden, dass sich während des Gebrauchs der Heißkanaldüse in Längserstreckungsrichtung des Düsenkörpers ein weitgehend gleichmäßiges Temperaturniveau ergibt. Da der den Hohlraum umgrenzende Teilbereich des Düsenkörpers einstückig ausgestaltet sein kann, können im Bereich des Hohlraums Undichtigkeiten, wie sie bei Fügestellen auftreten können, von vorne herein vermieden werden.

Der mindestens eine Hohlraum kann mit Hilfe eines sogenannten generativen Fertigungsverfahrens hergestellt werden, insbesondere durch selektives Lasersintern. Dabei wird der Düsenkörper schichtweise erzeugt, indem in einer Vielzahl von Arbeitsgängen jeweils eine dünne Schicht aus einem pulverförmigen Werkstoff vollflächig beispielsweise mittels eines Rakels auf eine entsprechende Unterlage aufgetragen wird. In Abhängigkeit von Geometriedaten wird jeweils an Bearbeitungsstellen, die den Stellen entsprechen, an denen der Düsenkörper erzeugt werden soll, ein Laserstrahl positioniert, um das Pulver zu sintern. Die Energie, die vom Laser zugeführt wird, wird vom Pulver absorbiert und führt an der Bearbeitungsstelle zu einem lokal begrenzten Sintern oder Verschmelzen von Partikeln. Anschließend wird die so erhaltene Struktur um die Dicke der Schicht abgesenkt, um in entsprechender Weise eine weitere Schicht aufzutragen und zu strukturieren. Die vorstehend genannten Verfahrensschritte werden wiederholt, bis der Düsenkörper fertig gestellt ist.

Bei einer vorteilhaften Ausgestaltung der Erfindung ist der Hohlraum evakuiert oder mit einem Medium befüllt, das eine andere Wärmeleitfähigkeit aufweist als der Werkstoff der an den Hohlraum angrenzenden Wandung des Düsenkörpers. Wenn der Hohlraum evakuiert ist, ermöglicht der Hohlraum eine besonders hohe Wärmeisolation. In dem Hohlraum kann aber auch ein Gas, wie z.B. Luft angeordnet sein, um eine hohe Wärmeisolation zu erreichen. Es ist aber auch möglich, dass der Hohlraum mit einem vorzugsweise flüssigen oder festen Medium befüllt ist, das eine hohe Wärmeleitfähigkeit aufweist. Dadurch kann an Stellen, an denen während des Betriebs der Heißkanaldüse besonders viel Wärme auftritt, eine wirkungsvolle Ableitung der Wärme hin zu kälteren Stellen erreicht werden.

Bei einer bevorzugten Ausführungsform der Erfindung ist das Medium ein Metall, das eine größere Wärmeleitfähigkeit aufweist als der Werkstoff der an den Hohlraum angrenzenden Wandung des Düsenkörpers. Das Metall kann insbesondere Kupfer und/oder Aluminium enthalten. Diese Metalle haben eine hohe Wärmeleitfähigkeit und sind dennoch relativ kostengünstig verfügbar und verarbeitbar. Das Metall bzw. das Medium wird bei der Herstellung der Heißkanaldüse bevorzugt durch eine in der Wandung des Hohlraums vorgesehene Befüllöffnung in den Hohlraum eingefüllt. Bei Bedarf kann der Hohlraum zusätzlich zu der Befüllöffnung eine Entlüftungsöffnung aufweisen. Die Befüllöffnung und ggf. die Entlüftungsöffnung werden nach dem Befüllen des Hohlraums verschlossen. Bei einem Festkörpermedium erfolgt das Verschließen der Befüll- und/oder Entlüftungsöffnung vorzugsweise durch das Medium selbst.

Bei einer Weiterbildung der Erfindung läuft der Hohlraum ringförmig um den Durchtrittskanal herum. Dadurch wird in Umfangsrichtung ein sehr gleichmäßiges Temperaturniveau des Düsenkörpers ermöglicht.

Vorteilhaft ist, wenn der Düsenkörper mindestens eine Kontaktfläche aufweist, die mit einer dazu passenden Anlagefläche einer Spritzgussform verbindbar ist, wenn der Düsenkörper zumindest einen zu der Kontaktfläche benachbarten ersten Hohlraum und wenigstens einen zweiten Hohlraum aufweist, der weiter von der mindestens einen Kontaktfläche beabstandet ist als der erste Hohlraum,
- wenn der erste Hohlraum mit einem ersten Medium und der zweite Hohlraum mit einem zweiten Medium befüllt ist, das eine größere Wärmeleitfähigkeit aufweist als das erste Medium, und/oder
- wenn der erste Hohlraum evakuiert und der zweite Hohlraum mit einem wärmeleitenden Medium befüllt ist.

Durch diese Maßnahme wird ein besonders gleichmäßiges Temperaturniveau entlang des Düsenkörpers ermöglicht.

Bei einer bevorzugten Ausgestaltung der Erfindung hat der Düsenkörper ein den Durchtrittskanal umgrenzendes Düsenrohr, wobei das Düsenrohr mit mindestens einem, die Kontaktfläche aufweisenden Düsenkörperteil verbunden ist, welches aus einem Werkstoff besteht, der eine geringere Wärmeleitfähigkeit aufweist als der Werkstoff des Düsenrohrs, und wobei der zumindest eine erste Hohlraum in dem mindestens einen Düsenkörperteil und der wenigstens eine zweiten Hohlraum in dem Düsenrohr angeordnet ist. Es können also auch verschiedene pulverförmige Werkstoffe verwendet werden, um unterschiedliche Teilbereiche des Düsenkörpers generativ herzustellen. Dadurch wird während des Betriebs der Heißkanaldüse der Wärmefluss von dem Düsenkörper in das Formwerkzeug der Spritzgießform besonders wirkungsvoll reduziert, so dass sich entlang der Längserstreckungsrichtung des Düsenkörpers ein noch gleichmäßigeres Temperaturniveau ergibt. Das Düsenrohr besteht bevorzugt aus Metall und das Düsenkörperteil aus Keramik.

Als pulverförmige Werkstoffe für die generative Herstellung des Düsenkörpers sind diverse Stähle, Nichteisen-Metalle, Sintermetalle, Keramiken usw. geeignet. Durch den Laserstrahl können diese verschiedenen Materialien hochfest miteinander verschmolzen werden. Partiell können auch sehr verschleißfeste Materialien verwendet werden, um z.B. eine Führung für eine Verschlussnadel in der Düse aufzubauen.

Bei einer vorteilhaften Ausführungsform der Erfindung weist der Düsenkörper ein den Durchtrittskanal umgrenzendes, vorzugsweise einstückiges Düsenrohr auf, wobei das Düsenrohr mindestens zwei in Längserstreckungsrichtung des Durchtrittskanals voneinander beabstandete Hohlräume hat, und wobei in Längserstreckungsrichtung zwischen diesen Hohlräumen ein Düsenrohrabschnitt angeordnet ist, der keine Hohlräume hat. Dadurch wird sowohl eine hohe mechanische Stabilität des Düsenrohrs als auch ein gleichmäßiges Temperaturniveau am Düsenrohr ermöglicht.

Bei Bedarf kann der Düsenköper mindestens zwei Hohlräume aufweisen, die über zumindest einen Verbindungskanal, der einen kleineren Querschnitt aufweist als die Hohlräume, miteinander verbunden sind. Dadurch können bei der Herstellung des Düsenkörpers auf einfache Weise mehrere Hohlräume gleichzeitig mit dem ersten Medium und/oder dem zweiten Medium befüllt werden.

Bei einer bevorzugten Ausgestaltung der Erfindung erstreckt sich dass sich mindestens ein Hohlraum oder ein Abschnitt eines solchen spiral- oder wendelförmig um die Längsmittelachse der der Heißkanaldüse. Durch diese Maßnahme kann die Wärmeleitung gegebenenfalls über die gesamte Düsenrohrlänge beeinflusst werden.

Vorteilhaft ist, wenn der Düsenkörper einen Grundkörper hat, auf den mittels eines generativen Verfahrens schichtweise ein Teilbereich aufgebracht ist, der den mindestens einen Hohlraum aufweist. Der Grundkörper kann dabei aus einem hochfesten Werkstoff bestehen, welcher die erforderlich Druck-/Temperatur- und Verschleißbeständigkeit aufweist. Der Grundkörper kann mit einem konventionellen Fertigungsverfahren hergestellt werden. Es ist aber auch denkbar, den Grundkörper aus einer gebrauchten Heißkanaldüse herzustellen, bei der beispielsweise die Nadelführung der Verschlussnadel verschlissen ist. Dabei kann der verschlissen Teilbereich der Nadelführung beispielsweise durch Abschleifen von der Heißkanaldüse entfernt und danach mit Hilfe des generativen Fertigungsverfahrens neu auf den verbleibenden Teil der Heißkanaldüse aufgebracht werden.

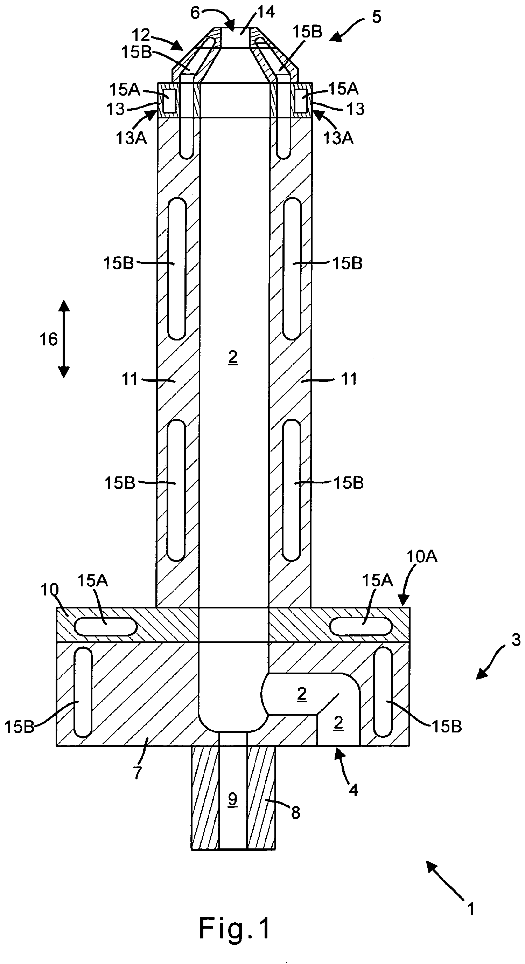

Nachfolgend ist ein Ausführungsbeispiel der Erfindung anhand der Zeichnung näher erläutert. Die einzige Figur zeigt einen Längsschnitt durch eine Heißkanaldüse.

Eine im Ganzen mit 1 bezeichnete Heißkanaldüse für eine Spritzgießform hat einen Düsenkörper, der einen Durchtrittskanal 2 für eine Schmelze aufweist. Der Durchtrittskanal 2 weist an einem in Gebrauchsstellung der Spritzgießform zugewandten ersten Endbereich 3 eine Zuführöffnung 4 und an einem davon beabstandeten zweiten Endbereich 5 eine Austrittsöffnung 6 für die Schmelze auf.

Die Heißkanaldüse 1 ist an ihrem ersten Endbereich 3 verbreitert, wodurch ein Kopf ähnlich wie bei einer Schraube gebildet ist. An seinem der Austrittsöffnung 6 abgewandten Ende weist der erste Endbereich 3 einen etwa scheibenförmigen Düsenträger 7 auf, an dessen der Austrittsöffnung 6 abgewandter Rückseitenfläche die Zuführöffnung 4 und eine einen Führungskanal 9 für eine in der Zeichnung nicht näher dargestellte, in den Durchtrittskanal 2 eingreifende Verschlussnadel umgrenzende erste Nadelführung 8 angeordnet sind. Die erste Nadelführung 8 besteht aus einem Werkstoff, der verschleißfester ist als der Werkstoff eines an die erste Nadelführung 8 angrenzenden Teilbereichs des Düsenträgers 7.

Die Zuführöffnung 4 ist quer zur Längserstreckung der Heißkanaldüse 1 gegenüber der Nadelführung 8 versetzt und der Durchtrittskanal 2 weist in dem Düsenträger 7 einen quer zur Längserstreckungsrichtung der Heißkanaldüse 1 verlaufenden Kanalabschnitt hat, welcher die Zuführöffnung 4 mit einem weiteren Kanalabschnitt verbindet, der sich entlang der Längsmittelachse der Heißkanaldüse 1 bis zur Austrittsöffnung 6 erstreckt.

An seinem der Austrittsöffnung 6 abgewandten Ende hat der erste Endbereich einen flächig mit dem Düsenträger 7 verbundenen, ebenfalls etwa scheibenförmigen Düsensitz 10, an dem die Heißkanaldüse an der Spritzgießform anliegt. Der Düsensitz 10 ist stoffschlüssig mit dem Düsenträger verbunden und besteht aus einem Werkstoff, der eine geringere Wärmeleitfähigkeit aufweist als der Werkstoff des Düsenträgers 7. Der Düsenträger 7 kann beispielsweise aus Metall und der Düsensitz 10 aus Keramik bestehen.

An ihrer dem Düsenträger 7 abgewandten Vorderseite ist der Düsensitz 10 stoffschlüssig mit einem Düsenrohr 11 verbunden, das etwa konzentrisch zum Durchtrittskanal 2 angeordnet ist und in Längserstreckungsrichtung der Heißkanaldüse 1 verläuft. Das Düsenrohr 11 besteht vorzugsweise aus Metall, insbesondere aus einem Stahl. Zur thermischen Entkopplung des Düsenrohrs 11 von der Spritzgießform ist zwischen der Außenmantelfläche des Düsenrohrs 11 und der Spritzgießform ein Luftspalt vorgesehen.

Das Düsenrohr 11 hat an seinem von dem Düsensitz 10 beabstandeten Ende einen Düsenabschnitt 12, der mit dem übrigen Düsenrohr 11 einstückig verbunden ist. Der Düsenabschnitt 12 weist an seinem freien Ende die Austrittsöffnung 6 auf und verjüngt konisch sich zu der Austrittsöffnung 6 hin. An der Austrittsöffnung 6 hat der Düsenabschnitt 12 eine zweite Nadelführung 14, die in gerader Verlängerung der ersten Nadelführung 8 angeordnet ist und aus einem verschleißfesten Werkstoff besteht.

Benachbart zu dem Düsenabschnitt 12 hat die Heißkanaldüse 1 an ihrem zweiten Endbereich einen rings umlaufenden Absatz, der eine Ausnehmung bildet, in der ein Isolierring 13 angeordnet ist. An dem Isolierring 13 liegt die Heißkanaldüse 1 an einer Widerlagerstelle der Spritzgießform an.

Zusätzlich zu dem Durchtrittskanal 2 und dem Führungskanal 9 für die Verschlussnadel weist der Düsenkörper mehrere erste Hohlräume 15a und mehrere zweite Hohlräume 15b auf. Die ersten Hohlräume 15a sind mit Luft befüllt und die zweiten Hohlräume 15b mit einem Metall, das eine größere Wärmeleitfähigkeit aufweist als der Werkstoff der an den betreffenden Hohlraum 15a, 15b angrenzenden Wandungen des Düsenkörpers. Das Metall kann insbesondere Kupfer sein. Die Wandungen, welche die einzelnen Hohlräume 15a, 15b jeweils begrenzen, sind einstückig miteinander verbunden. Dadurch werden an den Hohlräumen 15a, 15b Fügespalte, an denen Schmelze aus dem Düsenkörper austreten kann, vermieden.

Die Hohlräume 15a, 15b sind jeweils ringförmig ausgestaltet und laufen unterbrechungsfrei um den Durchtrittskanal 2 um. Im Düsensitz 10 und im Isolierring 13 ist jeweils ein erster Hohlraum 15a vorgesehen, der dazu dient, den Wärmeabfluss von dem Düsenkörper in die Spritzgießform und/oder die Innenhöhlung der Spritzgießform zu reduzieren.

Ferner sind in dem Düsenrohr 11 mehrere zweite Hohlräume 15b vorgesehen. Zueinander benachbarte zweite Hohlräume 15b sind in der durch den Doppelpfeil markierten Längserstreckungsrichtung des Düsenrohrs 11 durch Düsenrohrabschnitte beabstandet, die keine Hohlräume 15a, 15b aufweisen.

Im Bereich des Düsenrohrs 11 sind die zweiten Hohlräume 15b etwa mittig zwischen der Außen- und der Innenmantelfläche des Düsenrohrs 11 angeordnet. Mit Ausnahme von eventuell an den Hohlräumen 15b vorgesehenen Befüllöffnungen sind die zweiten Hohlräume 15b des Düsenrohrs 11 von der Außen- und der Innenmantelfläche des Düsenrohrs 11 beabstandet.

Durch die zweiten Hohlräume 15b wird die Wärmeleitfähigkeit des Düsenrohrs 11 vergrößert, damit während des Betriebs der Heißkanaldüse 1 entlang des Düsenrohrs 11 ein weitgehend gleichmäßiges Temperaturniveau erreicht wird. Eventuell über die Länge des Düsenrohrs 11 auftretende Temperaturunterschiede bewirken einen Wärmefluss im Düsenrohr 11, der den Temperaturunterschied abschwächt.

Auch in dem Düsenträger 7 ist ein zweiter Hohlraum 15b vorgesehen, der den Durchtrittskanal 2 ringförmig umläuft. Dieser zweite Hohlraum 15b befindet sich zwischen der geraden Verlängerung der Außenmantelfläche des Düsenrohrs 11 und der Außenumfangsfläche des Düsenträgers 7 und verläuft konzentrisch zu den zweiten Hohlräumen 15b des Düsenrohrs 11. Mit Ausnahme von einer eventuell an dem zweiten Hohlraum 15b des Düsenträgers 7 vorgesehenen Befüllöffnung ist der zweite Hohlraum 15b von der Außenumfangsfläche des Düsenträgers 7 beabstandet.

Sämtliche zweiten Hohlräume 15B können auch miteinander verbunden sein, um die Wärmeleitung über die gesamte Düsenlänge zu beeinflussen.

Denkbar wäre auch, die zweiten Hohlräume 15B zumindest im Bereich des Düsenrohrs 11 sowie des Düsenabschnitts 12 einstückig zum Beispiel als spiral- oder wendelförmig ausgebildeten Hohlraum auszuführen, welcher sich um die Mittelachse der Heißkanaldüse 1 windet.

## Patentansprüche

1. Heißkanaldüse (1) für Spritzgießformen, mit einem Düsenkörper, der ein Düsenrohr (11) hat, welches einen Durchtrittskanal (2) für Schmelze umgrenzt, wobei der Durchtrittskanal (2) an einem ersten Endbereich (3) eine Zuführöffnung (4) und an einem zweiten Endbereich (5) eine Austrittsöffnung (6) hat, wobei die Zufuhröffnung (4) an der, der Austrittsöffnung (6) abgewandten Seite eines Düsenträgers (7) angeordnet ist und an der Heißkanaldüse (1) mehrere erste und zweite ringförmige Hohlräume (15A, 15B) vorgesehen sind, von denen die ersten Hohlräume (15A) mit einem ersten Medium, insbesondere Gas befüllt sind, um eine hohe Wärmeisolation zu erreichen und die zweiten Hohlräume (15B) mit einem zweiten Medium befüllt sind, das eine größere Wärmeleitfähigkeit aufweist als der Werkstoff der an den Hohlraum angrenzenden Wandungen des Düsenkörpers, **dadurch gekennzeichnet, dass** der erste Endbereich (3) an seinem der Austrittsöffnung (6) abgewandten Ende einen etwa scheibenförmigen Düsenträger (7) und einen flächig mit dem Düsenträger (7) verbundenen, ebenfalls etwa scheibenförmigen Düsensitz (10) hat, der aus einem Werkstoff besteht, der eine geringere Wärmeleitfähigkeit aufweist als der Werkstoff des Düsenträgers (7), wobei im Düsenträger (7) ein zweiter Hohlraum (15B) angeordnet ist, und wobei der Düsensitz (10) sowohl mit dem Düsenträger (7) als auch mit dem Düsenrohr (11) stoffschlüssig verbunden ist, welches an seinem von dem Düsensitz (10) beabstandeten Ende einen Düsenabschnitt (12) aufweist, der sich konisch zu der Austrittsöffnung (6) hin verjüngt und im Düsensitz (10) ein erster Hohlraum (15A) vorgesehen ist, und mit dem von dem Düsensitz (10) beabstandeten Ende des Düsenrohrs (11) ein an einem rings umlaufenden Absatz der Heißkanaldüse (1) angeordneter Isolierring (13) verbunden ist, wobei im Isolierring (13) mindestens ein erster Hohlraum (15A) vorgesehen ist, der dazu dient, den Wärmeabfluss von dem Düsenkörper in die Spritzgießform zu reduzieren.

2. Heißkanaldüse (1) nach Anspruch 1, **dadurch gekennzeichnet, dass** im Düsensitz (10) mindestens ein weiterer erster Hohlraum (15A) vorgesehen ist, der dazu dient, den Wärmeabfluss von dem Düsenkörper in die Spritzgießform weiter zu reduzieren.

3. Heißkanaldüse (1) nach einem der vorhergehenden Ansprüche, **dadurch gekennzeichnet, dass** die Heißkanaldüse (1) benachbart zu dem Düsenabschnitt (12) an ihrem zweiten Endbereich einen rings umlaufenden Absatz aufweist, der eine Ausnehmung bildet, in der der Isolierring (13) angeordnet ist.

4. Heißkanaldüse (1) nach einem der vorhergehenden Ansprüche, **dadurch gekennzeichnet, dass** das in dem ersten Hohlraum (15A) angeordnete Gas Luft ist.

5. Heißkanaldüse (1) nach einem der Ansprüche 1 bis 4, **dadurch gekennzeichnet, dass** der Düsenkörper mindestens eine Kontaktfläche (10A, 13A) aufweist, die mit einer dazu passenden Anlagefläche einer Spritzgießform verbindbar ist, dass der Düsenkörper zumindest einen zu der Kontaktfläche (10A, 13A) benachbarten ersten Hohlraum (15A) und wenigstens einen zweiten Hohlraum (15B) aufweist, der weiter von der mindestens einen Kontaktfläche (10A, 13A) beabstandet ist als der erste Hohlraum.

6. Heißkanaldüse (1) nach Anspruch 5, **dadurch gekennzeichnet, dass** das Düsenrohr (11) mit mindestens einem, die Kontaktfläche (10A, 13A) aufweisenden Düsenkörperteil verbunden ist, welches aus einem Werkstoff besteht, der eine geringere Wärmeleitfähigkeit aufweist als der Werkstoff des Düsenrohrs (11), und dass der zumindest eine erste Hohlraum (15A) in dem mindestens einen Düsenkörperteil und der wenigstens eine zweite Hohlraum (15B) in dem Düsenrohr (11) angeordnet ist.

7. Verfahren zum Herstellen einer Heißkanaldüse (1) nach einem der Ansprüche 1 bis 6, weiter **dadurch gekennzeichnet, dass** der mindestens eine Hohlraum (15A, 15B) mit Hilfe eines generativen Fertigungsverfahrens hergestellt wird.

8. Verfahren nach Anspruch 7, **dadurch gekennzeichnet, dass** der Düsenkörper schichtweise erzeugt wird, indem in einer Vielzahl von Arbeitsgängen jeweils eine dünne Schicht aus einem pulverförmigen Werkstoff vollflächig beispielsweise mittels eines Rakels auf eine Unterlage aufgetragen wird, dass in Abhängigkeit von Geometriedaten jeweils an Bearbeitungsstellen, die den Stellen entsprechen, an denen der Düsenkörper erzeugt werden soll, ein Laserstrahl derart positioniert wird, dass das Pulver gesintert wird, dass anschließend die so erhaltene Struktur um die Dicke der Schicht abgesenkt wird, um in entsprechender Weise eine weitere Schicht aufzutragen und zu strukturieren, und dass die vorstehend genannten Verfahrensschritte wiederholt werden, bis der Düsenkörper fertig gestellt ist.

## Claims

1. Hot runner nozzle (1) for injection molds having a nozzle body with a nozzle tube (11) defining a passage channel (2) for a melt, wherein the passage channel (2) has a feed opening (4) at a first end region (3) and an outlet opening (6) at a second end region (5), the feed opening (4) is arranged on the side of a nozzle carrier (7) facing away from the outlet opening (6) and several first and second annular cavities (15A, 15B) are provided on the hot runner nozzle (1), of which the first cavities (15A) are filled with a first medium, in particular gas, in order to achieve high thermal insulation and the second cavities (15B) are filled with a second medium having a higher thermal conductivity than the material of the wall of the nozzle body adjacent to the cavity, **characterized in that** the first end region (3) at its end at the far side from the outlet opening (6) has a roughly disk-shaped nozzle carrier (7) and an also roughly disk-shaped nozzle seat (10) which is connected over its surface to the nozzle carrier (7), the nozzle seat (10) is made from a material having a lower thermal conductivity than the material of the nozzle carrier (7), wherein in the nozzle carrier (7) a second cavity (15B) is arranged and wherein the nozzle seat (10) is connected to both the nozzle carrier (7) and the nozzle tube (11) in a material-locking manner, the nozzle tube (11) has a nozzle section (12) at its end spaced from the nozzle seat (10), which tapers conically towards the outlet opening (6) and a first cavity (15A) is provided in the nozzle seat (10), and an insulating ring (13) provided on a peripheral shoulder of the hot runner nozzle (1) is connected to the end of the nozzle tube (11) distanced from the nozzle seat (10), wherein the insulating ring (13) has at least one first cavity (15A) that serves to reduce the heat drain from the nozzle body into the injection mold.

2. Hot runner nozzle according to claim 1, **characterized in that** at least one further first cavity (15A) is provided in the nozzle seat (10) which serves to further reduce the heat drain from the nozzle body to the injection mold.

3. Hot runner nozzle according to one of the preceding claims, **characterized in that** the hot runner nozzle (1) has a circumferential ring-shaped shoulder adjacent to the nozzle section (12) at its second end region, forming a recess in which the insulating ring (13) is arranged.

4. Hot runner nozzle according to one of the preceding claims, **characterized in that** the gas arranged in the first cavity (15A) is air.

5. Hot runner nozzle according to one of claims 1 to 4, **characterized in that** the nozzle body comprises at least one contact surface (10A, 13A) connectable to a corresponding surface of an injection mold, and **in that** the nozzle body has at least one first cavity (15A) adjacent to the contact surface (10A, 13A) and at least one second cavity (15B) that is located further away from the at least one contact surface (10A, 13A) than the first cavity (15A).

6. Hot runner nozzle according to claim 5, **characterized in that** the nozzle tube (11) is connected with at least one nozzle body part comprising the contact surface (10A, 13A), the part being made from a material having a lower thermal conductivity than the material of the nozzle tube (11) and **in that** the at least one first cavity (15A) is located in the at least one nozzle body part (11) and the at least one second cavity (15B) is located in the nozzle tube (11).

7. Method for manufacturing a hot runner nozzle (1) according to one of claims 1 to 6 further **characterized in that** the at least one cavity (15A, 15B) is manufactured by means of a generative manufacturing process.

8. Method according to claim 7, **characterized in that** the nozzle body is created in layers by applying one thin layer of a powdery material over the entire surface in each of a number of process steps on a substratum, using for example a spreading knife, and depending on geometry data, a laser beam is positioned to sinter the powder at each processing location corresponding to those positions where the nozzle body is to be created and then the structure obtained in this manner is lowered by the thickness of the layer to correspondingly apply and structure another layer in the same manner, and to repeat the process steps described above until the nozzle body is finished.

## Revendications

1. Buse à canal chaud (1) pour des moules de coulée par injection, comportant un corps de buse qui présente un tube de buse (11) qui délimite un canal de passage (2) pour une matière en fusion, le canal de passage (2) ayant une ouverture d'alimentation (4) dans une première zone d'extrémité (3) et une ouverture de sortie (6) dans une seconde zone d'extrémité (5), l'ouverture d'alimentation (4) étant disposée sur le côté d'un porte-buse (7) détourné de l'ouverture de sortie (6) et plusieurs premiers et seconds creux (15A, 15B) étant prévus sur la buse à canal chaud (1), dont les premiers creux (15A) sont remplis d'un premier fluide, en particulier de gaz, pour atteindre une haute isolation thermique, et dont les seconds creux (15B) sont remplis d'un second fluide qui présente une conductivité thermique supérieure à celle du matériau des parois du corps de buse adjacentes au creux,
**caractérisée en ce que**
à son extrémité détournée de l'ouverture de sortie (6), la première zone d'extrémité (3) présente un porte-buse (7) approximativement en forme de disque et un siège de buse (10) également approximativement en forme de disque et relié de façon surfacique au porte-buse (7), siège qui est constitué en un matériau ayant une conductivité thermique inférieure à celle du matériau du porte-buse (7), un second creux (15B) étant disposé dans le porte-buse (7) et le siège de buse (10) étant relié par coopération de matière aussi bien au porte-buse (7) qu'au tube de buse (11) qui présente à son extrémité espacée du siège de buse (10) une portion de buse (12) qui va en se rétrécissant coniquement vers l'ouverture de sortie (6), et un premier creux (15A) étant prévu dans le siège de buse (10), un anneau isolant (13) agencé sur un talon périphérique de la buse à canal chaud (1) étant relié à l'extrémité du tube de buse (11) espacée du siège de buse (10), au moins un premier creux (15A) étant prévu dans l'anneau isolant (13), qui sert à réduire la dissipation de chaleur depuis le corps de buse jusque dans le moule de coulée par injection.

2. Buse à canal chaud (1) selon la revendication 1, **caractérisée en ce qu'**au moins un autre premier creux (15A) est prévu dans le siège de buse (10), qui sert à réduire davantage la dissipation de chaleur depuis le corps de buse jusque dans le moule de coulée par injection.

3. Buse à canal chaud (1) selon l'une des revendications précédentes, **caractérisée en ce qu'**au voisinage de la portion de buse (12), dans sa seconde zone d'extrémité, la buse à canal chaud (1) comprend un talon périphérique qui constitue un évidement dans lequel est agencé l'anneau isolant (13).

4. Buse à canal chaud (1) selon l'une des revendications précédentes, **caractérisée en ce que** le gaz disposé dans le premier creux (15A) est de l'air.

5. Buse à canal chaud (1) selon l'une des revendications 1 à 4, **caractérisée en ce que** le corps de buse présente au moins une surface de contact (10A, 13A) qui est susceptible d'être reliée à une surface d'appui adéquate d'un moule de coulée par injection, **en ce que** le corps de buse comprend au moins un premier creux (15A) voisin de la surface de contact (10A, 13A) et au moins un second creux (15B) qui est espacé plus loin de ladite au moins une surface de contact (10A, 13A) que le premier creux.

6. Buse à canal chaud (1) selon la revendication 5, **caractérisée en ce que** le tube de buse (11) est relié à au moins une partie de corps de buse qui présente la surface de contact (10A, 13A) et qui est constituée en un matériau qui a une conductivité thermique inférieure à celle du matériau du tube de buse (11), et **en ce que** ledit au moins un premier creux (15A) est disposé dans ladite au moins une première partie de corps de buse et ledit au moins un second creux (15B) est disposé dans le tube de buse (11).

7. Procédé pour réaliser une buse à canal chaud (1) selon l'une des revendications 1 à 6, **caractérisée en outre en ce que** ledit au moins un creux (15A, 15B) est réalisé à l'aide d'un procédé de fabrication génératif.

8. Procédé selon la revendication 7, **caractérisé en ce que** le corps de buse est réalisé en couches en déposant sur un support, dans une multitude de passes de travail, une couche mince respective en un matériau pulvérulent sur toute la surface par exemple au moyen d'une raclette, **en ce qu'**en fonction de données géométriques, à des emplacements de traitement respectifs qui correspondent aux emplacements auxquels le corps de base doit être réalisé, un rayon laser est positionné de telle sorte que la poudre est frittée, qu'ensuite la structure ainsi obtenue est rétrécie de l'épaisseur de la couche, pour déposer de manière correspondante une autre couche et pour la structurer, et **en ce que** les étapes de procédé mentionnées ci-dessus sont répétées jusqu'à ce que le corps de buse soit fini.
